(19) **Europäisches Patentamt / European Patent Office / Office européen des brevets**

(11) **EP 4 057 097 B1**

(12) **EUROPEAN PATENT SPECIFICATION**

(45) Date of publication and mention
of the grant of the patent:
**16.07.2025  Bulletin 2025/29**

(21) Application number: **22160179.2**

(22) Date of filing: **04.03.2022**

(51) International Patent Classification (IPC):
***G05D 1/00*** (2024.01)

(52) Cooperative Patent Classification (CPC):
**G05D 1/0088; G05D 1/0055; G06N 3/006;
G06N 3/045; G06N 3/08; G06N 7/01; G08G 5/21;
G08G 5/34; G08G 5/54; G08G 5/55;** B64D 43/02;
B64D 2045/0085; G08G 5/58

(54) **ARTIFICIAL INTELLIGENCE POWERED  EMERGENCY PILOT ASSISTANCE SYSTEM**

NOTFALL-PILOTHILFESYSTEM MIT KÜNSTLICHER INTELLIGENZ

SYSTÈME D'ASSISTANCE AU PILOTAGE D'URGENCE ALIMENTÉ PAR INTELLIGENCE
ARTIFICIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021  IN 202111010530**

(43) Date of publication of application:
**14.09.2022  Bulletin 2022/37**

(73) Proprietor: **The Boeing Company
Arlington, VA 22202 (US)**

(72) Inventors:
• **GAMPA, Srikanth
  Chicago, 60606-2016 (US)**
• **KUMAR, Prabhat
  Chicago, 60606-2016 (US)**
• **CHATURVEDI, Shobhit
  Chicago, 60606-2016 (US)**

(74) Representative: **Boult Wade Tennant LLP
Salisbury Square House
8 Salisbury Square
London EC4Y 8AP (GB)**

(56) References cited:
**EP-A1- 3 422 130     US-A1- 2020 372 809**

• **FEITH RICK R.: "Safe Reinforcement Learning in
Flight Control Introduction to Safe Incremental
Dual Heuristic Pro", 30 January 2020
(2020-01-30), XP055943281, Retrieved from the
Internet <URL:https://repository.tudelft.nl/
islandora/object/uuid%
3A07f53daa-b236-4bb9-b010-bc6654383744>
[retrieved on 20220715]**
• **SUTTON RICHARD S ET AL: "Reinforcement
Learning: An Introduction Second edition, in
progress", 1 January 2015 (2015-01-01), pages 1 -
352, XP055918573, Retrieved from the Internet
<URL:https://web.stanford.edu/class/psych209/
Readings/SuttonBartolPRLBook2ndEd.pdf>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

This disclosure is generally related to the field of emergency pilot assistance and, in particular, to artificial intelligence powered emergency pilot assistance. Emergency situations in aircraft may put pressure on pilots and may place them in a stressful condition. While checklists and protocols exist to assist pilots during emergencies, the checklists and protocols are not typically tied to a current location and system state of the aircraft. Pilots make decisions regarding actions to be taken and, in extreme cases, determining safe landing zones.

While pilots are typically well-trained to handle emergency scenarios, no real-time cross-validation of a pilot's action is typically performed. Analysis is usually performed through debriefing after the emergency has been resolved. Further, no forecast or visualization of the action space and no prediction of the action space is typically performed. Thus, a pilot may not be certain regarding outcomes that may result from their actions.

US 2020/372809 A1, in accordance with its abstract, states an action recommendation system uses reinforcement learning that provides a next action recommendation to a traffic controller to give to a vehicle pilot such as an aircraft pilot. The action recommendation system uses data of past human actions to create a reinforcement learning model and then uses the reinforcement learning model with current ABS-B data to provide the next action recommendation to the traffic controller. The action recommendation system may use an anisotropic reward function and may also include an expanding state space module that uses a non-uniform granularity of the state space.

EP 3422130 A1, in accordance with its abstract, states a method and system for autonomously operating an aircraft. The method comprises:- a pre-flight training step comprising: retrieving recorded surveillance data of a plurality of flights corresponding to at least one aircraft type and at least one route; inferring aircraft intent from the recorded surveillance data; computing reconstructed trajectories using the inferred aircraft intent; selecting a training dataset comprising aircraft intent and reconstructed trajectories of flights corresponding to a particular aircraft type and route; applying a machine learning algorithm on the training dataset to obtain a mapping function between aircraft states and actions; and- a real-time control step executed during a flight of an aircraft, the real-time control step comprising: repeatedly retrieving onboard sensor data; obtaining real-time aircraft states from the onboard sensor data; determining actions associated to the real-time aircraft states using the mapping function; and executing the selected actions on the aircraft. Feith Rick R.: "Safe Reinforcement Learning in Flight Control Introduction to Safe Incremental Dual Heuristic Pro", 30 January 2020 (2020-01-30), in accordance with its abstract, states online continuous reinforcement learning has shown results in flight control achieving near optimal control and the capability to adapt to changes in the system. However, no guarantees about safety and performance can be given, needed for use in general aviation. Furthermore, performance is often dependent on the tuning of the hyper parameters inside the system. As an initial step in providing guarantees about safety and performance, this paper presents Safe Incremental Dual Heuristic Programming (SIDHP). SIDHP combines the fast learning speed of Incremental Dual Heuristic Programming (IDHP) with a safety layer, able to keep the aircraft within a predetermined safe flight envelope during training.

## SUMMARY

Described herein is an artificial intelligence based autonomous pilot assistance agent. The pilot assistance agent, also referred to herein as an artificial intelligence power emergency pilot assistance system, is trained based on scenarios run in an aircraft simulator. The system may compute velocities, altitudes, and headings of an aircraft from a given origin and destination without human intervention. Based on the computations, the pilot assistance agent may provide suggestive assistance and guidance to a pilot by translating translated the computed velocities, altitudes, and headings into control actions that can be performed by the pilot during emergencies. During normal flying condition the system may act as a performance evaluation system. In either case, the pilot may remain in control of the aircraft.

In an embodiment, an aircraft comprises an emergency pilot assistance system. The emergency pilot assistance system includes an artificial neural network configured to calculate reward (Q) values based on state-action vectors associated with an aircraft, where the state-action vectors include current state data associated with the aircraft and action data associated with the aircraft. The system further includes a user output device configured to provide an indication of an action to a user, where the action corresponds to an agent action that has a highest reward Q value as calculated by the artificial neural network. The artificial neural network is trained in two phases; the first phase includes training the model based on input from a pilot in a simulator and determining whether outcomes during emergency training scenarios are successful; and the second phase includes training the model based on automated scenarios without a pilot present

In some examples, the highest reward Q value is associated with landing the aircraft at a predetermined destination or a calculated emergency destination in response to an emergency. In some examples, the state data include data matrices associated with the aircraft, the data matrices indicating a heading value, a position value, a system state value, an environmental condition value, a feedback value, a pilot action value, a system availability value, a roll value, a pitch value, a yaw value, a rate of change of roll value, a rate of change of pitch value, a rate of change of yaw value, a longitude value, a latitude value, a rate of change of position value, a rate of change of velocity value, or any combination thereof. In some examples, the action data corresponds to a change in heading, a change in velocity, a change in roll, a change in pitch, a change in yaw, a change in a rate of change of roll, a change in a rate of change of pitch, a change in a rate of change of yaw, change in a rate of change of position, a change in a rate of change of velocity, or any combination thereof. In some examples, the agent action is translated into an aircraft surface control action using an inverse aircraft model.

In some examples, the agent action is taken from a flight envelope including aircraft flight constraints, where the aircraft flight constraints include maps of acceleration and deceleration, rates of climb, rates of drop, velocity thresholds, roll change rate thresholds, pitch change rate thresholds, yaw change rate thresholds, roll thresholds, pitch thresholds, and yaw thresholds.

In some examples, the artificial neural network includes a deep Q network. In some examples, the user output device is incorporated into a cockpit of an aircraft. In some examples, the indication of the user action includes a visual indication, an audio indication, a written indication, or any combination thereof. In some examples, the artificial neural network is implemented at one or more processors, where the one or more processors are configured to determine the state data based on one or more aircraft systems, determine availability data associated with one or more aircraft systems, determine a safe landing zone based on the state data and based on the availability data, determine the action data based on the safe landing zone, the availability data, the state data, and stored constraint data, and generate the state-action vectors based on the state data and the action data. In some examples, the one or more processors are configured to determine heading and velocity data associated with the highest reward Q value and perform one or more inverse dynamics operations to translate the heading and velocity data into the agent action. In some examples, the one or more processors are configured to compare user input to the indicated action and generate a performance rating.

In some examples, the use output device is configured to warn the user when a user input differs from the action. In some examples, the one or more processors are configured to generate updated state-action vectors associated with the aircraft based on updated state data and updated action data, and calculate additional reward Q values based on the updated state-action vectors, where the user output device is configured to provide an additional indication of an additional action to the user, where the additional action corresponds to an updated agent action that has an updated highest reward Q value as calculated by the artificial neural network.

In some examples, a method for training an artificial neural network for an emergency pilot assistance system includes generating training data for a deep Q network by receiving state data associated with an aircraft and an environment of the aircraft from a simulator while a user is operating the simulator; receiving action data from the simulator associated with actions by the user, generating a set of state-action vectors based on the state data and the action data, and determining a reward Q value associated with the set of state-action vectors. The method further includes training a deep Q network based on the training data.

In some examples, the method includes generating additional training data for the deep Q network by receiving automated state data associated with the aircraft from a memory, the automated state data corresponding to an automated scenario, receiving automated action data from the memory, the automated action data associated with the automated scenario, generating an additional set of state-action vectors based on the automated state data and the automated action data, and determining an additional reward Q value associated with the additional set of state-action vectors. The method further includes training the deep Q network based on the additional training data. Optionally, the state data include data matrices associated with the aircraft, the data matrices indicating a heading value, a position value, a system state value, an environmental condition value, a feedback value, a pilot action value, a system availability value, a roll value, a pitch value, a yaw value, a rate of change of roll value, a rate of change of pitch value, a rate of change of yaw value, a longitude value, a latitude value, a rate of change of position value, a rate of change of velocity value, or any combination thereof. Optionally, the action data corresponds to a change in heading, a change in velocity, a change in roll, a change in pitch, a change in yaw, a change in a rate of change of roll, a change in a rate of change of pitch, a change in a rate of change of yaw, change in a rate of change of position, a change in a rate of change of velocity, or any combination thereof. Optionally, the action data is based on a flight envelope including aircraft flight constraints, wherein the aircraft flight constraints include maps of acceleration and deceleration, rates of climb, rates of drop, velocity thresholds, roll change rate thresholds, pitch change rate thresholds, yaw change rate thresholds, roll thresholds, pitch thresholds, and yaw thresholds.

In an example, an emergency pilot assistance method includes calculating reward Q values using a deep Q network, where the reward values are based on state-action vectors associated with an aircraft, and where the state-action vectors include state data associated with the aircraft and action data associated with the aircraft. The method further includes providing an indication of an action to a user at a user output device, where the action corresponds to an agent action that has a highest reward Q value as calculated by the deep Q network. In some examples, the highest reward Q value is associated with landing the aircraft at a predetermined destination or a calculated emergency destination in response to an emergency.

## BRIEF DESCRIPTION OF THE DRAWINGS

FIG. 1 is a block diagram depicting an example of a system for training an artificial neural network in a first training phase.
FIG. 2 is a block diagram depicting an example of a system for training an artificial neural network in a second training phase.
FIG. 3 is a block diagram depicting an example of an emergency pilot assistance system in a first iteration.
FIG. 4 is a block diagram depicting an example of an emergency pilot assistance system in a second iteration.
FIG. 5 is a block diagram depicting an example of state data.
FIG. 6 is a block diagram depicting an example of action data.
FIG. 7 is a block diagram depicting an example of a flight envelope.
FIG. 8 is a flow chart depicting an example of a method for training an artificial neural network.
FIG. 9 is a flow chart depicting an example of a method for emergency pilot assistance.

Detailed Description

Described herein is a reinforcement learning based autonomous pilot assistance agent, also referred to herein as an artificial intelligence power emergency pilot assistance system, which is trained using an aircraft simulator and can perform the tasks of computing velocities, altitudes, and headings of an aircraft from a given origin and a destination without human intervention. The pilot assistance agent may be used to assist and guide a pilot during emergency situations. For example, the computed velocities, altitudes, and headings can be translated into control action that may be performed by the pilot to guide the aircraft to a safe landing zone.

The systems described herein may rely on a deep Q network to enable model free deep Q learning for obtaining complete reward-based mappings. The mappings may be used to determining a course of action during an emergency. As a brief overview of deep Q learning, as it is applied herein, during an emergency the system may determine a candidate goal (which for example may include determining a safe landing location). The system may also have access to a user policy, which may be based on aircraft flight constraints, a flight envelope, maps of acceleration and deceleration, rate of climb, and rate of drop. The user policy effectively describes the possible actions that may be taken at any given time within the aircraft. Based on these parameters, the system may iteratively map a sequence of possible actions to bring the aircraft to the candidate goal. If the sequence is successful in bringing the aircraft to the candidate goal (i.e., if the sequence will result in the aircraft landing safely at the safe landing location) then a high reward Q value (e.g., 1.0) may be assigned. If the sequence is not successful then a low reward Q value (e.g., 0.0) may be assigned. As each sequence may branch at each iteration the reward Q values may increase or decrease throughout the iterations depending on the likelihood of a safe landing at any given point in the sequence of actions.

The system may interact with an aircraft environment and pilot to select actions in a way that maximize future reward values. During the system calculations, because future states cannot be perfectly determined, a standard assumption that future rewards may be discounted by a set factor per time-step may be employed. A future discounted return $R_t$ may be calculated as follows:

$$ R_t = \sum_{t'=t}^{T} \gamma^{t'-t} r_{t'} $$

where $T$ is the flight duration, $t'$ is the current time step, $t$ is the next time step in the iteration, $\gamma$ is the discount factor, and $r_{t'}$ is the current discounted return. For the examples described herein, $\gamma$ was set to 0.99. However, other values are possible.

The desired action-value function Q*( s, a) may be defined as the best expected return achievable by following the policy based on a sequence, s, an action, a, Q*(s, a) may be derived based on the Bellman equation, which is known with respect to deep Q learning. For purposes of this disclosure, the relationship may be described as follows: if the optimal value Q*(s, a) of a sequence at the next time-step is known for all possible actions, then an optimizing strategy is to select an action that maximizes the expected value of r + YQ*(s', a'), where r is the discounted return and ϒ is the discount factor.

The reinforcement learning algorithm as described above may be used to estimate the action-value function by using the Bellman equation as an iterative update. If fully performed, the algorithm would converge to an optimal action-value function. In practice, however, this approach may be impractical, because the action-value function would be estimated separately for each sequence, without any generalization. Thus, the computations would expand exponentially which would likely involve more processing power than is available. Instead, a function approximator may be used to estimate the action-value function, Q(s, a; θ) < Q(s, a). In the reinforcement learning field this is typically a linear function approximator. By relying on training data received during simulation, a deep Q network may be developed to approximate the optimal actions to achieve the greatest probability of a successful outcome.

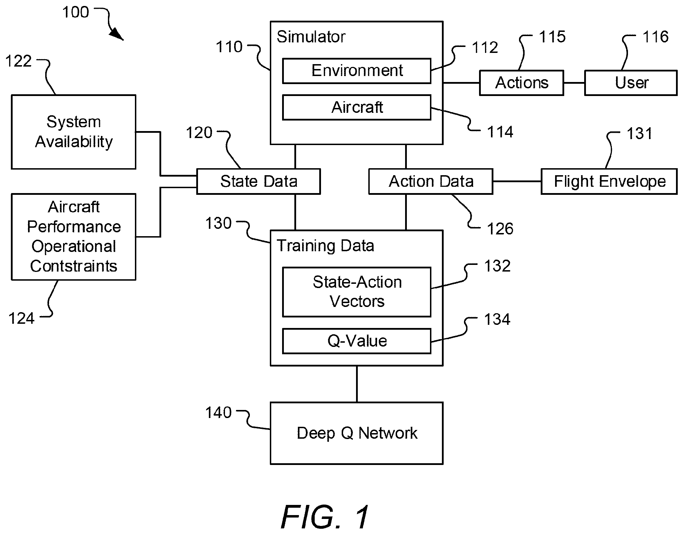

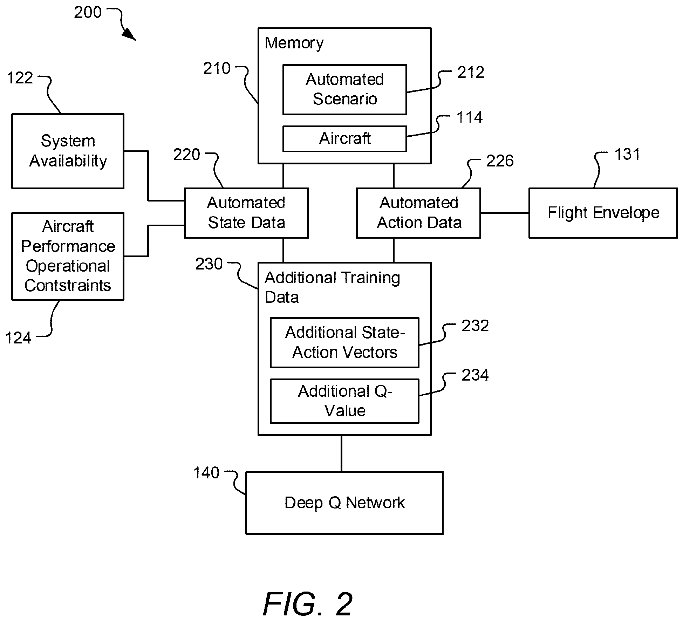

FIGS 1 and 2 depict systems for training an artificial neural network for use with an emergency pilot assistance system. Training the artificial neural network takes place in two phases. A first phase includes training the model based on input from a pilot in a simulator and determinations of whether outcomes during emergency training scenarios are successful. During the second phase, the model is trained based on automated scenarios without a pilot present.

During the first phase, training of the artificial neural network may be performed along with training a pilot in a training simulator. The system may learn end-to-end mappings of aircraft flight paths (e.g., velocities, altitudes, and headings) from environmental observation and user input with the task reward, e.g., a safe landing, as a form of supervision. The reward may be calculated based on safely landing the aircraft at a desired location or at a nearby safe landing location. From the perspective of the system being trained, the pilot's actions are incorporated into a policy that also includes constraints such as a flight envelope, maps of acceleration and deceleration, a rate of climb, a rate of drop and others policy data for a safe flight. From the pilot's perspective, the system may behave like an adaptive interface that learns a personalized mapping from the pilot's commands, environments, goal space and flight constraint policy to action of flight path and its other parameters.

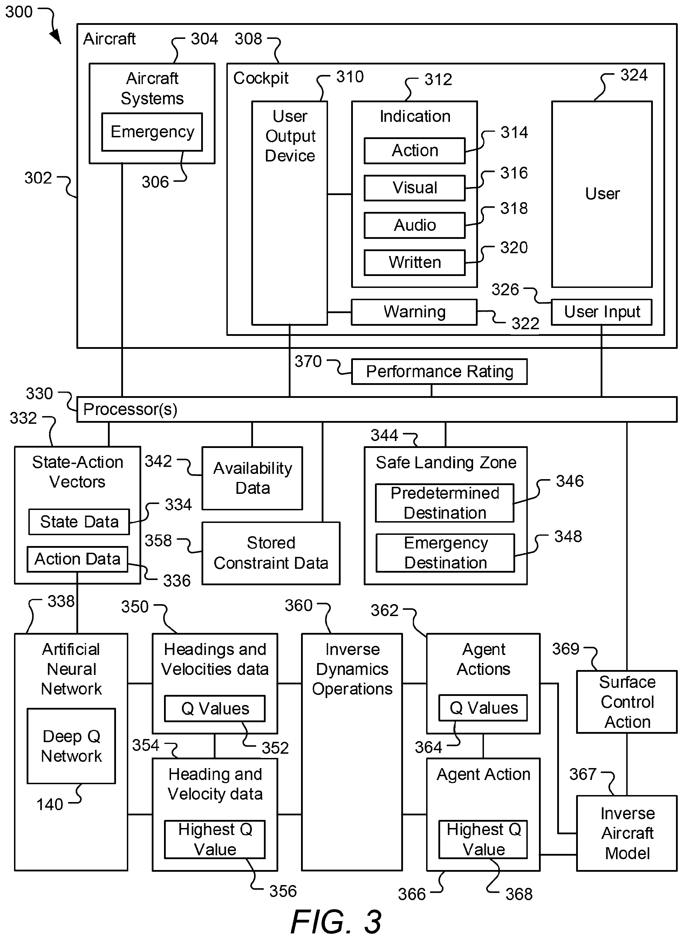

Referring to FIG. 1, an example of a system 100 for training an artificial neural network in a first training phase is depicted. The system 100 may include a simulator 110 and a deep Q network 140. It should be understood by persons of skill in the art, having the benefit of this disclosure, that the deep Q network 140 may be implemented as part of a broader artificial neural network as described further with reference to FIG. 3. The simulator 110 simulates an aircraft 114 and an environment 112 of the aircraft during pilot training of a user 116.

During operation, while the user 116 is performing training exercise in the simulator 110, state data 120 associated with the aircraft 114 and with the environment 112 of the aircraft 114 may be collected from the simulator 110. The state data 120 may indicate a current state of the aircraft 114 and the environment 112. A portion of the state data 120 may also be based on system availability 122 of the aircraft 114. For example, during an emergency one or more systems of the aircraft 114 may be inoperable or otherwise unavailable for use. These factors may be taken into account when generating the state data 120. The state data 120 may also be based on aircraft performance operational constraints 124, which may represent the limits of what a particular aircraft may do in a particular scenario being run at the simulator 110.

Action data 126 may also be collected from the simulator 110. The action data 126 may be derived from actions 115 taken by the user 116 during flight training. The action data 126 may also be based on a flight envelope 131, representing the actions that may be taken with respect to a particular aircraft.

Based on the state data 120 and the action data 126, training data 130 may be compiled. The training data 130 may include a set of state-action vectors 132 formed by combining the state data 120 and the action data 126 at incremental steps during the simulation. A reward Q value 134 may be determined based on an outcome associated with the set of state-action vectors 132 and based on the discounted return function described herein. The training data 130 may also include the reward Q value 134 and may be used as training data for the deep Q network 140.

A challenge typically associate with training emergency assistance systems may be adapting standard deep reinforcement learning techniques that leverage continuous input from the actions 115 and make adjustments to the inputs based on a consequence of feedback associated with the actions 115. By using human-in-the-loop deep Q-learning, as described herein, with a user 116 actively using the simulator 110, the system 100 may learn an approximate state-action value function that computes expected future return values without computing each possible path in the state-action vectors 132 for an action given current environmental observation and the pilot's control input. Rather than finding a highest-value action, the deep Q network 140 may be trained to determine a closest high-value action to a user's input. This approach balances taking optimal actions with preserving a pilot's feedback control loop. This approach also enables the user 116 to directly modulate a level of assistance through a parameter $\alpha \varepsilon$ [0, 1], which may set a threshold for tolerance for suboptimal actions.

Standard deep reinforcement learning algorithm may include a large number of interactions for a very long period in order to have sufficient training. Simulator training alone is likely to be insufficient because it may not be feasible to obtain enough data. During a second phase of training, pilot control input is replaced with automated scenario files having fixed control inputs from various origins to various destinations. The automated scenario files may cover more of the operating condition of an aircraft during these scenarios. This automated training approach may also be useful for covering extreme emergency conditions, which may be difficult to simulate with a pilot. In some cases, this training will enable the system to determine a safe course of action more reliably than a pilot by learning based on a full-spectrum of input from each scenario and learning based on scenarios that have not yet been anticipated by pilots.

The remaining portions of the second phase of training may be the same as described with reference to FIG. 1. Deep Q-learning may be used to learn an approximate state-action value function that computes the expected future return of an action given the current environmental observation, policy constraint, and the automated scenario's input. Equipped with this value function, the system may execute the closest high-value action to the scenario's control input. The reward function for the agent may be a combination of known terms computed for every state, and a terminal reward provided by the user upon succeeding in landing the plane safely.

Referring to FIG. 2, an example of a system 200 for training an artificial neural network in a second training phase is depicted. The system 200 may include a memory 210 and a deep Q network 140. The memory 210 may store an automated scenario 212 associated with an aircraft 114. In practice, many automated scenarios would be stored in the memory 210.

The memory 210 may include memory devices such as random-access memory (RAM), read-only memory (ROM), magnetic disk memory, optical disk memory, flash memory, another type of memory capable of storing data and processor instructions, or the like, or combinations thereof. Further, the memory may be part of a processing device (not shown) such as a computing device.

During operation, automated state data 220 associated with the aircraft 114 and with the automated scenario 212 may be collected. In some examples, the collection may take the form of multiple automated scenario files. The automated state data 220 may indicate a current state of the aircraft 114 during the automated scenario 212. A portion of the automated state data 220 may also be based on system availability 122 of the aircraft 114 and on aircraft performance operational constraints 124, as described with reference to FIG. 1. Automated action data 226 may also be derived from the automated scenario 212 and a flight envelope 131, representing the actions that may be taken with respect to the aircraft 114.

Based on the automated state data 220 and the automated action data 226, additional training data 230 may be compiled. The additional training data 230 may include an additional set of state-action vectors 232 formed by combining the automated state data 220 and the automated action data 226. An additional reward Q value 234 may be determined based on an outcome associated with the additional set of state-action vectors 232 and based on the discounted return function described herein. The additional training data 230 may include the additional reward Q value 234 and may be used to train the deep Q network 140.

While FIG. 2 is described with respect to a single automated scenario 212, in practice many scenarios may be stored in the memory 210 and may be used to generate the additional training data 230. Because the additional training data 230 is not compiled based on real time situations, it may be generated much faster, thereby enabling sufficient training data to be generated to fully train the deep Q network 140. By using both pilot simulator generated data and automated scenario data, the deep Q network 140 may be trained to learn realistic pilot responses for a complete set of emergency scenarios.

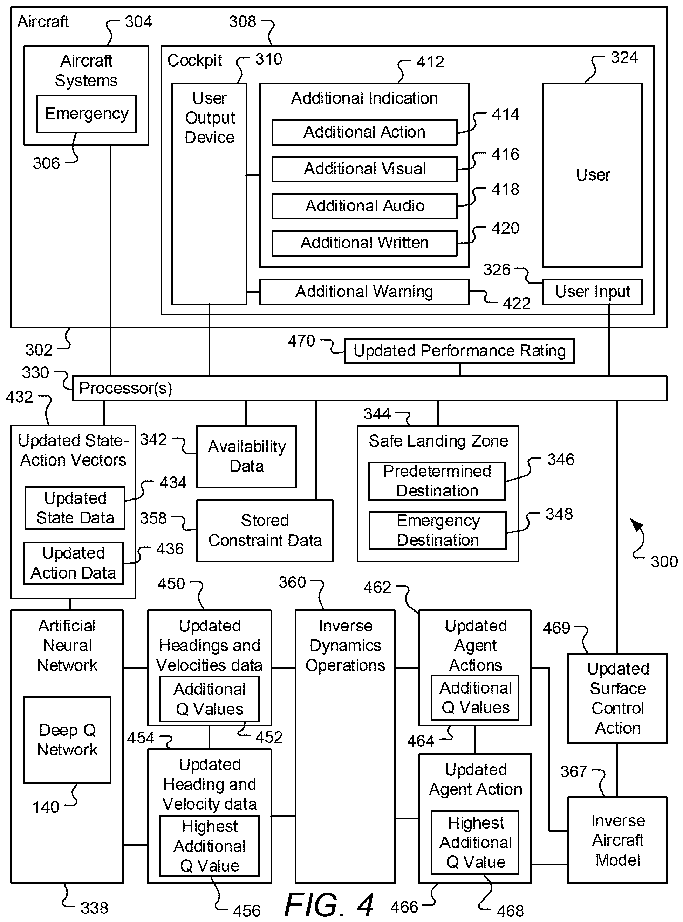

Referring to FIGS. 3 and 4, the deep Q network 140 may be implemented in an example of an emergency pilot assistance system 300 to assist a pilot during an emergency. As a brief overview, during an emergency, the system 300 may determine a state of an aircraft 302. The state may relate to factors such as whether the aircraft is landing, approaching, or climbing. Other possible states may exist. Likewise, the system 300 may analyze the onboard system availability of the aircraft 302 to determine availability data 342. The system availability may relate to potential engine failure, surface control failure, fuel availability, and structural integrity. Based on the system availability and aircraft situational condition, the system 300 may determine a safe landing zone and guide the pilot on maneuvers. Based on the current system state and aircraft current feedback the system 300 may estimate near-optimal trajectories to the safe landing destination. The system 300 may continuously evaluate the situation to guide the pilot to necessary action.

The system 300 may include, or otherwise be implemented at, an aircraft 302. The system may also include one or more processors 330, which may be implemented at the aircraft 302 or in some examples, may be distributed in a decentralized manner. The system 300 may also include an artificial neural network 338. Portions of the system 300 may be implemented at the one or more processors 330. However, for clarity different functional aspects of the system 300 may be depicted as separate from the processors 330.

The aircraft 302 may include aircraft systems 304 and a cockpit 308. The aircraft systems 304 may include mechanical systems, electrical systems, sensors, actuators, and the like. At least some of the aircraft system 304 may be able to determine the existence of an emergency 306. The cockpit 308 may include a user output device 310. The user output device 310 may include visual output systems, audio output systems, text output systems, and the like. The aircraft 302 may include additional systems to perform functions typically associated with aircraft, but which are omitted from FIG. 3 for clarity.

The one or more processors 330 may include a microcontroller, a central processing unit (CPU), a graphical processing unit (GPU), a digital signal processor (DSP), a peripheral interface controller (PIC), another type of microprocessor, and/or combinations thereof. Further, the one or more processors 330 may be implemented as integrated circuits, complementary metal-oxide-semiconductor (CMOS) field-effect-transistor (MOSFET) circuits, very-large-scale-integrated (VLSI) circuits, field-programmable gate arrays (FPGAs), application-specific integrated circuit (ASICs), combinations of logic gate circuitry, other types of digital or analog electrical design components, or combinations thereof.

The artificial neural network 338 may include the deep Q network 140 and may be trained as described herein. In particular, the artificial neural network may be trained to perform an approximation function to determine reward Q values associated with states and possible actions associated with the aircraft 302. It should be understood by persons of skill in the art, having the benefit of this disclosure, that the artificial neural network 338 may be a broader network, of which the deep Q network 140 may be a part.

During operation, an emergency 306 may result from, or be detected by, one or more of the aircraft systems 304. In response to the emergency 306, the one or more processors 330 may determine state data 334 and action data 336 based on the aircraft systems 304. For example, the state data 334 may include a matrix of aircraft heading, positions and velocity, current state, environmental condition, feedbacks, pilot action, aircraft system availability such as current value roll, pitch, yaw, rate of change of roll, pitch and yaw, longitude and latitude, rate of change of position, velocity, other state parameters associated with the aircraft 302, or combinations thereof. The action data 336 may be based on heading and velocity such as the value of roll, pitch, yaw, rate of change of roll, pitch and yaw, rate of change of position, and velocity. State-action vectors 332 may be generated based on the state data 334 and the action data 336.

The processors 330 may determine and/or compile availability data related to the aircraft systems 304. For example, in an emergency 306, some systems may not be available. A safe landing zone 344 may be determined based on the state data 334 and based on the availability data 342. The safe landing zone 344 may be a predetermined destination 346 or, in some cases, an emergency destination 348 may be determined based on a location of the aircraft 302 and based on the availability data 342 and stored constraint data 358 associated with the aircraft 302. The action data 336 may depend on the safe landing zone 344, the availability data 342, the state data 334, and stored constraint data 358.

The artificial neural network 338 may be used to determine headings and velocities data 350 that may be associated with calculated reward Q values 352. The reward Q values 352 may be determined based on the state-action vectors 332 and may be associated with landing the aircraft 302 safely at the safe landing zone 344. For example, the higher the reward Q values 352 are, the more likely a safe landing is to occur. From the headings and velocities data 350, heading and velocity data 354 may be associated with a highest reward Q value 356 as determined by the artificial neural network 338.

One or more inverse dynamics operations 360 may be performed to translate the heading and velocity data 354 into an agent action 366. Further, in some examples, additional data from the headings and velocities data 350 may be translated into agent actions 362. Each of the agent actions 362 may be associated with reward Q values 364, which may correspond to the reward Q values 352. The agent action 366 may be associated with a highest reward Q value 368 that corresponds to the highest reward Q value 356 of the heading and velocity data 354. An inverse aircraft model 367 may be used to translate the agent action 366 into a surface control action 369 that may be usable as instructions to the user 324 to guide the aircraft 302.

Within the cockpit 308, the user output device 310 may provide an indication 312 of an action 314 to the user 324. The action 314 may correspond to the agent action 366 and may also be, or may be derived from, the surface control action 369. The indication 312 of the action 314 may include a visual indication 316, an audio indication 318, a written indication 320, or any combination thereof. If the user 324 does not perform the action 314, then the user output device 310 may generate a warning 322. The user may perform actions using user input 326, which may include flight controls and/or other controls associated with aircraft cockpits. In cases where, there is no emergency, the system 300 may nevertheless generate a performance rating 370 associated with a flight based on comparing the agent actions 362 generated by the artificial neural network 338 to the user input 326.

It should be noted that the process described with respect to the system 300 is iterative and may be continually performed during a flight and/or during an in-flight emergency. Thus, agent actions may be continually fed to the output device 310 as the state-action vectors 332 change. Referring to FIG. 4, this continual update is depicted. As the aircraft 302 changes its vectors and as the availability data 342 changes based on the aircraft systems 304 during the emergency 306, updated state-action vector 432 may be generated. The updated state-action vectors 432 may include updated state data 434 and updated action data 436.

The artificial neural network 338 may be used to generate updated headings and velocities data 450, which may be associated with additional reward Q values 452. The updated heading and velocity data 454 that is associated with a highest additional reward Q value 456 may be determined to safely guide the user 324 to land at the safe landing zone 344. Based on the updated headings and velocities data 450, updated agent actions 462 may be generated and associated with additional reward Q values 464, which may correlate with the additional reward Q values of the updated headings and velocities data 450. An updated agent action 466 may be associated with a highest additional reward Q value 468, which may correlate with the highest additional reward Q value 456 of the updated heading and velocity data 454. The updated agent action 466 may be used to generate an updated surface control action 469.

The user output device 310 may be configured to provide an additional indication 412 of an additional action 414 to the user 324. The additional indication 412 may include an additional visual indication 416, an additional audio indication 418, an additional written indication 420, or any combination thereof. If the user 324 does not perform the additional action 414, an additional warning 422 may be generated. As before, an updated performance rating 470 may be generated based on comparing the user input 326 to the updated agent actions 462.

By providing indications of actions that a pilot can take to safely land an aircraft at a safe landing zone, the system 300 may reduce the workload on the pilot in case of an emergency. Further, the system 300 may warn pilot when the pilot's actions may lead to on such action which can lead into catastrophic failure. Also, even in cases where there is no emergency, the system 300 can, nevertheless, rate a pilot's performance for training purposes. Other advantages may exist.

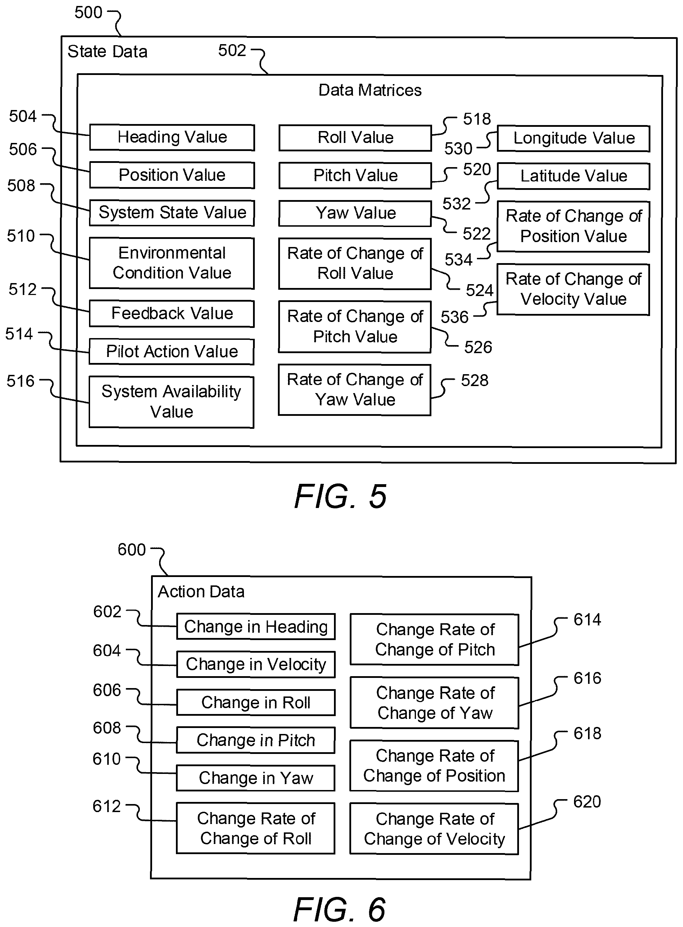

Referring to FIG. 5, an example of state data 500 is depicted. The state data 500 may include data matrices 502 associated with an aircraft, such as the aircraft 302, the data matrices 502 may indicate a heading value 504, a position value 506, a system state value 508, an environmental condition value 510, a feedback value 512, a pilot action value 514, a system availability value 516, a roll value 518, a pitch value 520, a yaw value 522, a rate of change of roll value 524, a rate of change of pitch value 526, a rate of change of yaw value 528, a longitude value 530, a latitude value 532, a rate of change of position value 534, a rate of change of velocity value 536, or any combination thereof. The state data 500 may correspond to the state data 120, the automated state data 220, the state data 334, and/or the updated state data 434.

Referring to FIG. 6, an example of action data 600 is depicted. The action data 600 may include a change in heading 602, a change in velocity 604, a change in roll 606, a change in pitch 608, a change in yaw 610, a change in a rate of change of roll 612, a change in a rate of change of pitch 614, a change in a rate of change of yaw 616, change in a rate of change of position 618, a change in a rate of change of velocity 620, or any combination thereof. The action data 600 may correspond to the action data 126, the automated action data 226, the action data 336, and/or the updated action data 436.

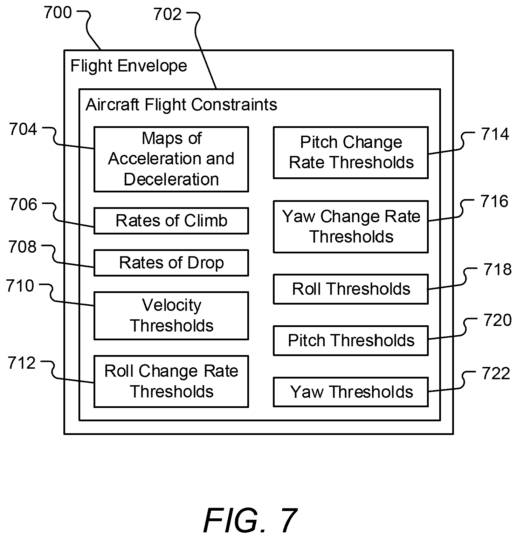

Referring to FIG. 7 an example of a flight envelope 700 is depicted. The action data 336 may be based at least partially on the flight envelope 700. The flight envelope 700 may include aircraft flight constraints 702. The aircraft flight constraints 702 may include maps of acceleration and deceleration 704, rates of climb 706, rates of drop 708, velocity thresholds 710, roll change rate thresholds 712, pitch change rate thresholds 714, yaw change rate thresholds 716, roll thresholds 718, pitch thresholds 720, and yaw thresholds 722.

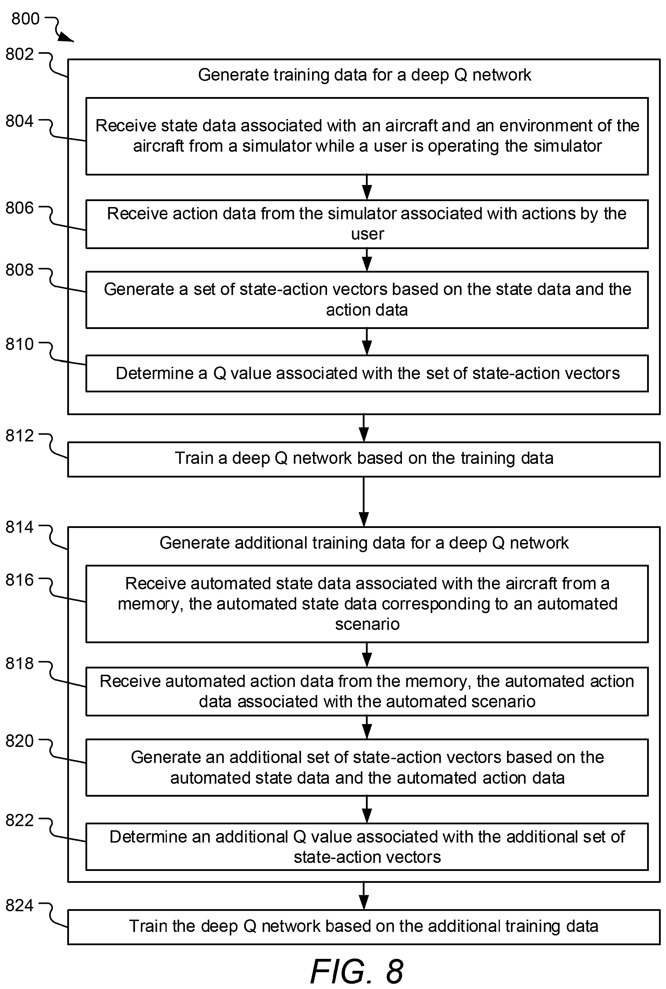

Referring to FIG. 8, a flow chart depicting an example of a method 800 for training an artificial neural network is depicted. The method 800 includes generating training data for a deep Q network, at 802. The training data 130 for the deep Q network 140 is generated by the simulator 110.

Generating the training data may include receiving state data associated with an aircraft and an environment of the aircraft from a simulator while a user is operating the simulator, at 804. For example, the state data 120 may be received from the simulator 110 while the user 116 is operating the simulator 110.

Generating the training data may further include receiving action data from the simulator associated with actions by the user, at 806. For example, the action data 126 may be received from the simulator 110.

Generating the training data may also include generating a set of state-action vectors based on the state data and the action data, at 808. For example, the set of state-action vectors 132 may be generated based on the state data 120 and the action data 126.

Generating the training data may include determining a reward Q value 134 associated with the set of state-action vectors 132, at 810. For example, the reward Q value 134 may be determined by the system 100 and may be associated with the set of state-action vectors 132.

The method 800 further includes training a deep Q network based on the training data, at 812. For example, the deep Q network 140 is trained based on the training data 130.

The method 800 also includes generating additional training data for the deep Q network, at 814. For example, the additional training data 230 may be generated based on the automated scenario 212, and additional automated scenarios during additional iterations.

Generating the additional training data may include receiving automated state data associated with the aircraft from a memory, the automated state data corresponding to an automated scenario, at 816. For example, the automated state data 220 may be received from the memory 210.

Generating the additional training data may further include receiving automated action data from the memory, the automated action data associated with the automated scenario, at 818. For example, the automated action data 226 may be received from the memory 210.

Generating the additional training data may also include generating an additional set of state-action vectors based on the automated state data and the automated action data, at 820. For example, the additional set of state-action vectors 232 may be generated based on the automated state data 220 and the automated action data 226.

Generating the additional training data may include determining an additional reward Q value associated with the additional set of state-action vectors, at 822. For example, the additional reward Q value 234 may be generated and may be associated with the additional set of state-action vectors 232.

The method 800 includes training the deep Q network based on the additional training data, at 824. For example, the deep Q network 140 is trained based on the additional training data 230.

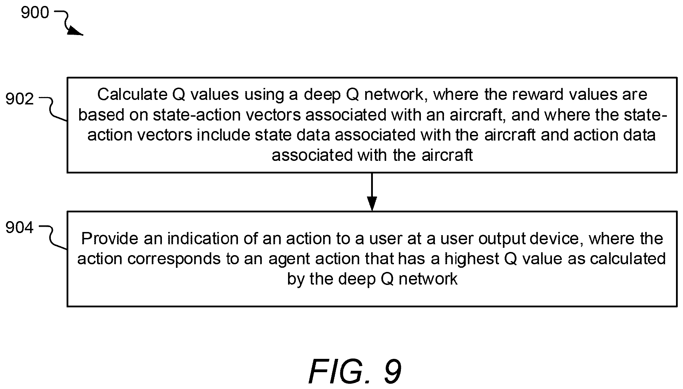

Referring to FIG. 9, a flow chart depicting an example of a method 900 for emergency pilot assistance is depicted. The method 900 may include calculating reward Q values using a deep Q network, wherein the reward values are based on state-action vectors associated with an aircraft, and wherein the state-action vectors include state data associated with the aircraft and action data associated with the aircraft, at 902. For example, the reward Q values 352 may be calculated using the deep Q network 140 and may be based on the state-action vectors 332 associated with the aircraft 302.

The method 900 may further include providing an indication of an action to a user at a user output device, wherein the action corresponds to an agent action that has a highest reward Q value as calculated by the deep Q network, at 904. For example, the indication 312 of the action 314 may be provided to the user 324 at the user output device 310.

## Claims

1. An aircraft (302) comprising an emergency pilot assistance system (300), the emergency pilot assistance system (300) comprising:

   an artificial neural network (338) configured to calculate reward (Q) values (352) based on state-action vectors (332) associated with the aircraft (302), wherein the state-action vectors (332) include state data (334, 500) associated with the aircraft (302) and action data (336, 600) associated with the aircraft (302); and
   a user output device (310) configured to provide an indication (312) of an action (314) to a user (324), wherein the action (314) corresponds to an agent action (366) that has a highest reward Q value (368) as calculated by the artificial neural network (338),

   wherein:

   the artificial neural network (338) is trained in two phases;
   the first phase includes training the artificial neural network (338) based on input from a pilot in a simulator and determining whether outcomes during emergency training scenarios are successful; and
   the second phase includes training the artificial neural network (338) based on automated scenarios without a pilot present.

2. The aircraft (302) of claim 1, wherein the highest reward Q value (356) is associated with landing the aircraft (302) at a predetermined destination (346) or a calculated emergency destination (348) in response to an emergency (306).

3. The aircraft (302) of claim 1 or 2, wherein the state data (500) include data matrices (502) associated with the aircraft (302), the data matrices (502) indicating a heading value (504), a position value (506), a system state value (508), an environmental condition value (510), a feedback value (512), a pilot action value (514), a system availability value (516), a roll value (518), a pitch value (520), a yaw value (522), a rate of change of roll value (524), a rate of change of pitch value (526), a rate of change of yaw value (528), a longitude value (530), a latitude value (532), a rate of change of position value (534), or a rate of change of velocity value (536), or any combination thereof.

4. The aircraft (302) of any one of claims 1-3, wherein the action data (600) corresponds to a change in heading (602), a change in velocity (604), a change in roll (606), a change in pitch (608), a change in yaw (610), a change in a rate of change of roll (612), a change in a rate of change of pitch (614), a change in a rate of change of yaw (616), change in a rate of change of position (618), or a change in a rate of change of velocity (620), or any combination thereof.

5. The aircraft (302) of any one of claims 1-4, wherein the agent action (366) is taken from a flight envelope (700) including aircraft flight constraints (702), wherein the aircraft flight constraints (702) include maps of acceleration and deceleration (704), rates of climb (706), rates of drop (708), velocity thresholds (710), roll change rate thresholds (712), pitch change rate thresholds (714), yaw change rate thresholds (716), roll thresholds (718), pitch thresholds (720), and yaw thresholds (722).

6. The aircraft (302) of any one of claims 1-5, wherein the artificial neural network (338) includes a deep Q network (140).

7. The aircraft (302) of any one of claims 1-6, wherein the user output device (310) is:

   incorporated into a cockpit (308) of an aircraft (302), and wherein the indication (312) of the action (314) includes a visual indication (316), an audio indication (318), a written indication (320), or any combination thereof; and/or
   further configured to warn the user (324) when a user input (326) differs from the action (314).

8. The aircraft (302) of any one of claims 1-7, wherein the artificial neural network (338) is implemented at one or more processors (330).

9. The aircraft (302) of any claim 8, wherein the one or more processors (330) are configured to:

   determine the state data (334) based on one or more aircraft systems (304);
determine availability data (342) associated with one or more aircraft systems (304);
determine a safe landing zone (344) based on the state data (334) and based on the availability data (342);
determine the action data (336) based on the safe landing zone (344), the availability data (342), the state data (334), and stored constraint data (358); and
generate the state-action vectors (332) based on the state data (334) and the action data (336).

10. The aircraft (302) of claim 8 or 9, wherein the one or more processors (330) are configured to:

determine heading and velocity data (354) associated with the highest reward Q value (356); and
perform one or more inverse dynamics operations (360) to translate the heading and velocity data (354) into the agent action (366).

11. The aircraft (302) of any one of claims 8-10, wherein the one or more processors (330) are configured to: compare user input (326) to the action (314) and generate a performance rating (370).

12. The aircraft (302) of any one of claims 8-11, wherein the one or more processors (330) are configured to:

generate updated state-action vectors (432) associated with the aircraft (102) based on updated state data (434) and updated action data (436); and
calculate additional reward Q values (452) based on the updated state-action vectors (432), wherein the user output device (310) is configured to provide an additional indication (412) of an additional action (414) to the user (324), wherein the additional action (414) corresponds to an updated agent action (466) that has an updated highest reward Q value (468) as calculated by the artificial neural network (338).

13. The aircraft (302) of any one of claims 8-12, wherein the one or more processors (330) are configured to: translate the agent action (366) into an aircraft surface control action (369) using an inverse aircraft model (367).

14. The aircraft (302) of any preceding claim, comprising a cockpit (308), wherein the emergency pilot assistance system (300) is incorporated into the cockpit (308).

15. An emergency pilot assistance method (900), using the aircraft (302) of any preceding claim, comprising:

calculating (902) reward (Q) values (352) using a deep Q network (140), wherein the reward values (352) are based on state-action vectors (332) associated with the aircraft (302), and wherein the state-action vectors (332) include state data (334) associated with the aircraft (302) and action data (336) associated with the aircraft (302); and
providing (904) an indication (312) of an action (314) to a user (324) at a user output device (310), wherein the action (314) corresponds to an agent action (366) that has a highest reward Q value (368) as calculated by the deep Q network (140).

**Patentansprüche**

1. Flugzeug (302) mit einem Notfall-Pilotenassistenzsystem (300), wobei das Notfall-Pilotenassistenzsystem (300) umfasst:

ein künstliches neuronales Netzwerk (338), das konfiguriert ist, um Belohnungswerte (Q-Werte) (352) basierend auf dem Flugzeug (302) zugeordneten Zustands-Aktions-Vektoren (332) zu berechnen, wobei die Zustands-Aktions-Vektoren (332) dem Flugzeug (302) zugeordnete Zustandsdaten (334, 500) und dem Flugzeug (302) zugeordnete Aktionsdaten (336, 600) enthalten; und
eine Benutzerausgabevorrichtung (310), die konfiguriert ist, um einen Hinweis (312) auf eine Aktion (314) für einen Benutzer (324) bereitzustellen, wobei die Aktion (314) einer Agentenaktion (366) entspricht, die einen höchsten Belohnungswert Q (368), wie durch das künstliche neuronale Netzwerk (338) berechnet, aufweist, wobei
das künstliche neuronale Netzwerk (338) in zwei Phasen trainiert ist;
die erste Phase das Trainieren des künstlichen neuronalen Netzwerks (338) auf der Grundlage von Eingaben eines Piloten in einem Simulator und das Bestimmen umfasst, ob Ergebnisse in Notfalltrainingsszenarien erfolgreich sind; und
die zweite Phase das Trainieren des künstlichen neuronalen Netzwerks (338) auf der Grundlage automatisierter Szenarien ohne Anwesenheit eines Piloten umfasst.

2. Flugzeug (302) nach Anspruch 1, bei dem der höchste Belohnungswert Q (356) der Landung des Flugzeugs (302) an einem vorgegebenen Zielort (346) oder einem berechneten Notzielort (348) als Reaktion auf einen Notfall (306) zugeordnet ist.

3. Flugzeug (302) nach Anspruch 1 oder 2, bei dem die Zustandsdaten (500) dem Flugzeug (302) zugeordnete Datenmatrizen (502) umfassen, wobei die Datenmatrizen (502) einen Kurswert (504), einen Positionswert (506), einen Systemzustandswert (508), einen Umgebungsbedingungswert (510), einen Rückkopplungswert (512), einen Pilotenaktionswert (514), einen Systemverfügbarkeitswert (516), einen Rollwert (518), einen Nickwert (520), einen Gierwert (522), eine Rollwertänderungsrate (524), eine Nickwertänderungsrate (526), eine Gierwertänderungsrate (528), einen Längengradwert (530), einen Breitengradwert (532), eine Positionswertänderungsrate (534) oder eine Änderungsrate des Geschwindigkeitswerts (536) oder eine beliebige Kombination davon angeben.

4. Flugzeug (302) nach einem der Ansprüche 1-3, bei dem die Aktionsdaten (600) einer Kursänderung (602), einer Geschwindigkeitsänderung (604), einer Rolländerung (606), einer Nickänderung (608), einer Gieränderung (610), einer Änderung der Rolländerungsrate (612), einer Änderung der Neigungsänderungsrate (614), einer Änderung der Gieränderungsrate (616), einer Änderung der Positionsänderungsrate (618) oder einer Änderung der Geschwindigkeitsänderungsrate (620) oder einer beliebigen Kombination davon entsprechen.

5. Flugzeug (302) nach einem der Ansprüche 1-4, bei dem die Agentenaktion (366) aus einer Flugbereichsgrenze (700) entnommen wird, die Flugbeschränkungen (702) für das Flugzeug umfasst, wobei die Flugbeschränkungen (702) für das Flugzeug Beschleunigungs- und Verzögerungsfunktionen (704), Steigraten (706), Sinkraten (708), Geschwindigkeitsschwellen (710), Rolländerungsgeschwindigkeitsschwellen (712), Nickänderungsgeschwindigkeitsschwellen (714), Gieränderungsgeschwindigkeitsschwellen (716), Rollschwellen (718), Nickschwellen (720) und Gierschwellen (722) umfassen.

6. Flugzeug (302) nach einem der Ansprüche 1- 5, bei dem das künstliche neuronale Netzwerk (338) ein Deep-Q-Netzwerk (140) umfasst.

7. Flugzeug (302) nach einem der Ansprüche 1-6, bei dem die Benutzerschnittstelle (310)

in ein Cockpit (308) eines Flugzeugs (302) integriert ist und der Hinweis (312) auf die Aktion (314) einen visuellen Hinweis (316), einen akustischen Hinweis (318), einen schriftlichen Hinweis (320) oder eine beliebige Kombination davon umfasst; und/oder
ferner konfiguriert ist, um den Benutzer (324) zu warnen, wenn eine Benutzereingabe (326) von der Aktion (314) abweicht.

8. Flugzeug (302) nach einem der Ansprüche 1-7, bei dem das künstliche neuronale Netzwerk (338) in einem oder mehreren Prozessoren (330) implementiert ist.

9. Flugzeug (302) nach einem der Ansprüche 8, bei dem die ein oder mehreren Prozessoren (330) konfiguriert sind, um

die Zustandsdaten (334) basierend auf einem oder mehreren Flugzeugsystemen (304) zu bestimmen;
ein oder mehreren Flugzeugsystemen (304) zugeordnete Verfügbarkeitsdaten (342) zu bestimmen;
eine sichere Landezone (344) auf der Grundlage der Zustandsdaten (334) und auf der Grundlage der Verfügbarkeitsdaten (342) zu bestimmen;
die Aktionsdaten (336) auf der Grundlage der sicheren Landezone (344), der Verfügbarkeitsdaten (342), der Zustandsdaten (334) und gespeicherter Einschränkungsdaten (358) zu bestimmen; und
die Zustands-Aktions-Vektoren (332) auf der Grundlage der Zustandsdaten (334) und der Aktionsdaten (336) zu erzeugen.

10. Flugzeug (302) nach Anspruch 8 oder 9, bei dem die ein oder mehreren Prozessoren (330) konfiguriert sind, um:

die dem höchsten Belohnungswert Q (356) zugeordneten Kurs- und Geschwindigkeitsdaten (354) zu bestimmen; und
eine oder mehrere inverse dynamische Operationen (360) durchzuführen, um die Kurs- und Geschwindigkeitsdaten (354) in die Agentenaktion (366) zu übersetzen.

11. Flugzeug (302) nach einem der Ansprüche 8-10, bei dem die ein oder mehreren Prozessoren (330) konfiguriert sind, um:
die Benutzereingabe (326) mit der Aktion (314) zu vergleichen und eine Leistungsbewertung (370) zu erzeugen.

12. Flugzeug (302) nach einem der Ansprüche 8-11, bei dem die ein oder mehreren Prozessoren (330) konfiguriert sind, um

aktualisierte dem Flugzeug (102) zugeordnete Zustands-Aktions-Vektoren (432) auf der Grundlage aktualisierter Zustandsdaten (434) und aktualisierter Aktionsdaten (436) zu erzeugen; und
zusätzliche Belohnungs-Q-Werte (452) auf der Grundlage der aktualisierten Zustands-Aktions-Vektoren (432) zu berechnen,
wobei die Benutzerschnittstelle (310) konfiguriert ist, um dem Benutzer (324) einen zusätzlichen Hinweis (412) auf eine zusätzliche Aktion (414) zu geben, wobei die zusätzliche Aktion (414) einer aktualisierten Agentenaktion (466) entspricht, die einen aktualisierten höchsten Belohnungs-Q-Wert (468), wie durch das künstliche neuronale Netzwerk (338) berechnet, aufweist.

13. Flugzeug (302) nach einem der Ansprüche 8-12, bei dem die ein oder mehreren Prozessoren (330) konfiguriert sind, um:
die Agentenaktion (366) unter Verwendung eines inversen Flugzeugmodells (367) in eine Flugzeugoberflächensteuerungsaktion (369) zu übersetzen.

14. Flugzeug (302) nach einem der vorhergehenden Ansprüche, umfassend ein Cockpit (308), wobei das Notfall-Pilotenassistenzsystem (300) in das Cockpit (308) integriert ist.

15. Verfahren zur Notfall-Pilotenassistenz (900) unter Verwendung des Flugzeugs (302) nach einem der vorhergehenden Ansprüche, mit den Schritten:

Berechnen (902) von Belohnungswerten (Q) (352) unter Verwendung eines Deep-Q-Netzwerks (140), wobei die Belohnungswerte (352) auf dem Flugzeug (302) zugeordneten Zustands-Aktions-Vektoren (332) basieren und wobei die Zustands-Aktions-Vektoren (332) dem Flugzeug (302) zugeordnete Zustandsdaten (334) und dem Flugzeug (302) zugeordnete Aktionsdaten (336) umfassen; und
Bereitstellen (904) eines Hinweises (312) auf eine Aktion (314) für einen Benutzer (324) an einem Benutzerausgabegerät (310), wobei die Aktion (314) einer Agentenaktion (366) entspricht, die einen höchsten Belohnungs-Q-Wert (368), wie durch das Deep-Q-Netzwerk (140) berechnet, aufweist.

**Revendications**

1. Aéronef (302), comprenant un système d'assistance au pilotage d'urgence (300), le système d'assistance au pilotage d'urgence (300) comprenant :

un réseau neuronal artificiel (338) configuré pour calculer des valeurs (Q)de récompense (352) sur la base de vecteurs d'action d'état (332) associés à l'aéronef (302), dans lequel les vecteurs d'action d'état (332) incluent des données d'état (334, 500) associées à l'aéronef (302) et des données d'action (336, 600) associées à l'aéronef (302) ; et
un dispositif de sortie d'utilisateur (310) configuré pour fournir une indication (312) d'une action (314) à un utilisateur (324), dans lequel l'action (314) correspond à une action d'agent (366) qui présente une valeur Q de récompense la plus élevée (368) telle que calculée par le réseau neuronal artificiel (338), dans lequel :

le réseau neuronal artificiel (338) est entraîné en deux phases ;
la première phase inclut un entraînement du réseau neuronal artificiel (338) sur la base d'un entrée d'un pilote dans un simulateur, et une détermination de la réussite ou non de résultats pendant des scénarios d'entraînement d'urgence ; et
la seconde phase inclut un entraînement du réseau neuronal artificiel (338) sur la base de scénarios automatisés sans la présence d'un pilote.

2. Aéronef (302) selon la revendication 1, dans lequel la valeur Q de récompense la plus élevée (356) est associée à un atterrissage de l'aéronef (302) à une destination prédéterminée (346) ou à une destination d'urgence calculée (348) en réponse à une urgence (306).

3. Aéronef (302) selon la revendication 1 ou 2, dans lequel les données d'état (500) incluent des matrices de données (502) associées à l'aéronef (302), les matrices de données (502) indiquant une valeur de cap (504), une valeur de position (506), une valeur d'état de système (508), une valeur de condition d'environnement (510), une valeur de rétroaction (512), une valeur d'action de pilote (514), une valeur de disponibilité de système (516), une valeur de roulis (518), une valeur de tangage (520), une valeur de lacet (522), un taux de changement de valeur de roulis (524), un taux de changement de valeur de tangage (526), un taux de changement de valeur de lacet (528), une valeur de longitude (530), une valeur de latitude (532), un taux de changement de valeur de position (534) ou un taux de changement de valeur de vitesse (536), ou toute combinaison de ceux-ci.

4. Aéronef (302) selon l'une quelconque des revendications 1 à 3, dans lequel les données d'action (600) correspondent à un changement de cap (602), un changement de vitesse (604), un changement de roulis (606), un changement de tangage (608), un changement de lacet (610), un taux de taux de changement de roulis (612), un changement de taux de changement de tangage (614), un changement de taux de changement de lacet (616), un changement de taux de changement de position (618), ou un changement de taux de changement de vitesse (620), ou toute combinaison de ceux-ci.

5. Aéronef (302) selon l'une quelconque des revendications 1 à 4, dans lequel l'action d'agent (366) est prise à partir d'une enveloppe de vol (700) incluant des contraintes de vol d'aéronef (702), dans lequel les contraintes de vol d'aéronef (702) incluent des cartes d'accélération et de décélération (704), des taux de montée (706), des taux de chute (708), des seuils de vitesse (710), des seuils de taux de changement de roulis (712), des seuils de taux de changement de tangage (714), des seuils de taux de changement de lacet (716), des seuils de roulis (718), des seuils de tangage (720) et des seuils de lacet (722).

6. Aéronef (302) selon l'une quelconque des revendications 1 à 5, dans lequel le réseau neuronal artificiel (338) inclut un réseau Q profond (140).

7. Aéronef (302) selon l'une quelconque des revendications 1 à 6, dans lequel le dispositif de sortie d'utilisateur (310) est :

   incorporé dans un poste de pilotage (308) d'un aéronef (302), et dans lequel l'indication (312) de l'action (314) inclut une indication visuelle (316), une indication audio (318), une indication écrite (320), ou toute combinaison de celles-ci ; et/ou
   configuré en outre pour avertir l'utilisateur (324) lorsqu'une entrée utilisateur (326) diffère de l'action (314).

8. Aéronef (302) selon l'une quelconque des revendications 1 à 7, dans lequel le réseau neuronal artificiel (338) est mis en œuvre au niveau d'un ou de plusieurs processeurs (330).

9. Aéronef (302) selon la revendication 8, dans lequel les un ou plusieurs processeurs (330) sont configurés pour :

   déterminer les données d'état (334) sur la base d'un ou plusieurs systèmes d'aéronef (304) ;
   déterminer des données de disponibilité (342) associées à un ou plusieurs systèmes d'aéronef (304) ;
   déterminer une zone d'atterrissage sécurisée (344) sur la base des données d'état (334) et sur la base des données de disponibilité (342) ;
   déterminer les données d'action (336) sur la base de la zone d'atterrissage sécurisée (344), des données de disponibilité (342), des données d'état (334) et des données de contrainte stockées (358) ; et
   générer les vecteurs d'action d'état (332) sur la base des données d'état (334) et des données d'action (336).

10. Aéronef (302) selon la revendication 8 ou 9, dans lequel les un ou plusieurs processeurs (330) sont configurés pour :

   déterminer de données de cap et de vitesse (354) associées à la valeur Q de récompense la plus élevée (356) ; et
   effectuer une ou plusieurs opérations de dynamique inverse (360) pour traduire les données de cap et de vitesse (354) en l'action d'agent (366).

11. Aéronef (302) selon l'une quelconque des revendications 8 à 10, dans lequel les un ou plusieurs processeurs (330) sont configurés pour :
   comparer l'entrée d'utilisateur (326) à l'action (314) et générer une évaluation de performance (370).

12. Aéronef (302) selon l'une quelconque des revendications 8 à 11, dans lequel les un ou plusieurs processeurs (330) sont configurés pour :

   générer des vecteurs d'action d'état mis à jour (432) associés à l'aéronef (102) sur la base de données d'état mises à jour (434) et de données d'action mises à jour (436) ; et
   calculer des valeurs Q de récompense supplémentaires (452) sur la base des vecteurs d'action d'état mis à jour (432), dans lequel le dispositif de sortie d'utilisateur (310) est configuré pour fournir une indication supplémentaire (412) d'une action supplémentaire (414) à l'utilisateur (324), dans lequel l'action supplémentaire (414) correspond à une action d'agent mise à jour (466) qui présente une valeur Q de récompense la plus élevée mise à jour (468) telle que calculée par le réseau neuronal artificiel (338).

13. Aéronef (302) selon l'une quelconque des revendications 8 à 12, dans lequel les un ou plusieurs processeurs (330) sont configurés pour :
   traduire l'action d'agent (366) en une action de commande de surface d'aéronef (369) en utilisant un modèle d'aéronef inverse (367).

14. Aéronef (302) selon l'une quelconque des revendications précédentes, comprenant un poste de pilotage (308), dans lequel le système d'assistance au pilotage d'urgence (300) est incorporé dans le poste de pilotage (308).

15. Procédé d'assistance au pilotage d'urgence (900), en utilisant l'aéronef (302) selon l'une quelconque des revendications précédentes, comprenant les étapes consistant à :

calculer (902) des valeurs (Q) de récompense (352) en utilisant un réseau Q profond (140), dans lequel les valeurs de récompense (352) sont basées sur des vecteurs d'action d'état (332) associés à l'aéronef (302), et dans lequel les vecteurs d'action d'état (332) incluent des données d'état (334) associées à l'aéronef (302) et des données d'action (336) associées à l'aéronef (302) ; et

fournir (904) une indication (312) d'une action (314) à un utilisateur (324) au niveau d'un dispositif de sortie d'utilisateur (310), dans lequel l'action (314) correspond à une action d'agent (366) qui présente une valeur Q de récompense la plus élevée (368) telle que calculée par le réseau Q profond (140).

FIG. 1

FIG. 2

*FIG. 3*

FIG. 4

500

State Data          502

Data Matrices

504 — Heading Value

506 — Position Value

508 — System State Value

510 — Environmental Condition Value

512 — Feedback Value

514 — Pilot Action Value

516 — System Availability Value

Roll Value          518
                    530

Pitch Value         520
                    532

Yaw Value           522

Rate of Change of Roll Value    534
                                524

Rate of Change of Pitch Value   536
                                526

Rate of Change of Yaw Value     528

Longitude Value

Latitude Value

Rate of Change of Position Value

Rate of Change of Velocity Value

*FIG. 5*

600

Action Data

602 — Change in Heading

604 — Change in Velocity

606 — Change in Roll

608 — Change in Pitch

610 — Change in Yaw

612 — Change Rate of Change of Roll

Change Rate of Change of Pitch        614

Change Rate of Change of Yaw          616

Change Rate of Change of Position     618

Change Rate of Change of Velocity     620

*FIG. 6*

FIG. 7

800

802

Generate training data for a deep Q network

804

Receive state data associated with an aircraft and an environment of the aircraft from a simulator while a user is operating the simulator

806

Receive action data from the simulator associated with actions by the user

808

Generate a set of state-action vectors based on the state data and the action data

810

Determine a Q value associated with the set of state-action vectors

812

Train a deep Q network based on the training data

814

Generate additional training data for a deep Q network

816

Receive automated state data associated with the aircraft from a memory, the automated state data corresponding to an automated scenario

818

Receive automated action data from the memory, the automated action data associated with the automated scenario

820

Generate an additional set of state-action vectors based on the automated state data and the automated action data

822

Determine an additional Q value associated with the additional set of state-action vectors

824

Train the deep Q network based on the additional training data

*FIG. 8*

900

902 — Calculate Q values using a deep Q network, where the reward values are based on state-action vectors associated with an aircraft, and where the state-action vectors include state data associated with the aircraft and action data associated with the aircraft

904 — Provide an indication of an action to a user at a user output device, where the action corresponds to an agent action that has a highest Q value as calculated by the deep Q network

*FIG. 9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020372809 A1

- EP 3422130 A1

**Non-patent literature cited in the description**

- **FEITH RICK R.** *Safe Reinforcement Learning in Flight Control Introduction to Safe Incremental Dual Heuristic Pro*, 30 January 2020